# EUROPÄISCHE PATENTSCHRIFT

(11) **EP 0 980 293 B1**
(45) Veröffentlichungstag und Bekanntmachung des Hinweises auf die Patenterteilung: **28.08.2002**
(21) Anmeldenummer: 98928086.2
(22) Anmeldetag: 27.03.1998
(51) Int. Cl.: B07C 3/20

(54) **VERFAHREN UND ANORDNUNG ZUM ERKENNEN VON VERTEILINFORMATIONEN**
MAIL DISTRIBUTION INFORMATION RECOGNITION METHOD AND DEVICE
PROCEDE ET DISPOSITIF DE RECONNAISSANCE D'INFORMATION DE DISTRIBUTION DE COURRIER

(30) Priorität: 03.05.1997 DE 19718805
(43) Veröffentlichungstag der Anmeldung: 23.02.2000
(73) Patentinhaber: SIEMENS AKTIENGESELLSCHAFT, 80333 München (DE)
(72) Erfinder: SUCHENWIRTH-BAUERSACHS, Richard, D-78315 Radolfzell (DE); ROSENBAUM, Walter, F-75116 Paris (FR); MILETZKI, Udo, D-78465 Konstanz (DE)
(86) Internationale Anmeldenummer: DE9800897
(87) Internationale Veröffentlichungsnummer: WO98050173

(56) Entgegenhaltungen:
- FR-A- 2 591 512
- US-A- 4 921 107
- US-A- 5 558 232

## Beschreibung

Die Erfindung betrifft ein Verfahren und eine Anordnung nach den Oberbegriffen der unabhängigen Ansprüche und ist besonders vorteilhaft bei der Ermittlung von in nichtalphabetischen Schriften geschriebenen Verteilinformationen auf Sendungen einsetzbar.

Systeme zum automatischen Lesen von Verteilinformationen, insbesondere Adressen (OCR) sind auf dem Gebiet der Briefbearbeitung wohlbekannt und z.B. in der DE 195 31 392 beschrieben. Mit modernen OCR-Briefsortieranlagen sind Bearbeitungsraten von 10 Briefen pro Sekunde, d. h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adreßinformation. Im Falle einer erfolgreichen Erkennung kann der betreffende Brief mit einem maschinenlesbaren Barcode versehen werden. Dieser Barcode erlaubt eine weitere mechanische Bearbeitung bis zu einer beliebigen gewünschten Sortierordnung. Insbesondere ermöglicht die Verwendung von Barcodes eine Sortierung der Briefe bis zur Sortierebene des Postgangs, bei der Briefe entsprechend der Reihenfolge ihrer Verteilung durch den Zusteller sortiert werden.

Ökonomische Trends und ein zunehmendes Postaufkommen im asiatischen Raum haben zu erhöhten Anstrengungen bei der automatischen Erkennung von östlichen Schriften geführt, um Kosten zu begrenzen und den Postservice zu erhöhen. Dabei treten gegenüber der Situation in westlichen Ländern, in denen die Postautomation eine bereits etablierte Technologie darstellt, neue Anforderungen an die Erkennungssysteme auf, die daher stammen, daß in den meisten Staaten des asiatischen Beckens chinesische Schriftzeichen zum lokalen Adressieren der Post eingesetzt werden. Chinesische Schriftzeichen sind, anders als die Buchstaben westlicher alphabetischer Schriften, als Ideogramme aufgebaut. Jedes dieser Ideogramme kann ein Wort repräsentieren. Statt eines Alphabets mit einer Menge von dreißig bis sechzig Buchstaben sind 3.000 bis 6.000 verschiedene chinesische Schriftzeichen im täglichen Gebrauch, jedes mit einer eigenen charakteristischen Form. Diese praktische Nichtabgeschlossenheit des chinesischen Schriftzeichensystems und die ideographische Struktur der einzelnen Zeichen führt zu einer verminderten Effektivität von OCR-Systemen im Vergleich zu westlichen alphabetischen Schriftsystemen. Darüber hinaus werden Probleme dadurch verursacht, daß auf den Postsachen die Adresse entweder in vertikaler oder horizontaler Richtung orientiert erscheint und daß häufig Mischungen aus chinesischen und westlichen Schriften auftreten.

Da generell die Erkennungsraten der automatischen Lesesysteme sowohl für westliche als auch für chinesische Schriftzeichen sehr variieren, ist es notwendig, diese durch verschiedene Formen von manueller Intervention zu unterstützen. Die einfachste Intervention ist bei Zurückweisung nicht automatisch lesbarer Briefe die Durchführung eines Handsortierverfahrens. Allerdings sind die dadurch entstehenden Kosten mit zunehmenden Arbeitskosten unökonomisch hoch. Hinzu kommt, daß solche handsortierte Post auch zu einem späteren Zeitpunkt nicht mehr ohne weiteres mechanisch weitersortiert werden kann, so daß zwei voneinander getrennte Ströme von Sendungen erzeugt werden, die wiederum manuell zu einem bestimmten Zeitpunkt verschmolzen werden müssen.

Um diese Nachteile manueller Sortierung von OCR-zurückgewiesenen Sendungen zu vermeiden, sind verschiedene Verfahren für eine manuelle Codierung von Poststücken entwickelt worden. Alle diese Verfahren verwenden Interventionen durch Operateure, um Barcodes auf die Sendungen auf eine Weise aufzubringen, die konsistent ist mit dem Erfordernis, eine mechanische Sortierung durch die gleichen Maschinen vorzunehmen, die OCR-gelesene und barcodierte Post bearbeiten.

Ein weiteres Verfahren, um zurückgewiesene Poststücke zu codieren, verwendet sogenannte manuelle Codierplätze. An diesen manuellen Codierplätzen werden die Sendungen physikalisch hintereinander einem Operateur vorgeführt, wobei der Operateur für jedes dieser Sendungen so viel Information codiert wie notwendig ist, um den Bestimmungsort eindeutig zu identifizieren. Dabei wird die eingegebene Adresse mittels eines Verzeichnisses in einen Sortierbarcode umgewandelt, der auf die Sendung aufgebracht wird. Die codierten Sendungen werden dann mittels Barcodesortierern (BCS), die mechanisch identisch mit OCR-geeigneten BCS sind, weiterbearbeitet. Solche manuellen Codierplätze wurden als erste von der US-Post und der Royal Mail in den 70er Jahren eingeführt. Die Hauptnachteile solcher Vorrichtungen bestehen in der notwendigen Entfernung von Sendungen aus dem OCR-Sendungsstrom und ergonomischen Schwierigkeiten für den Operator beim Erkennen der ihm vorbeigeführten Sendungen.

Der nächste Fortschritt in der Behandlung von OCR-zurückgewiesener Sendungen war die Entwicklung von On-line-Videocodiersystemen (OVS). In einem OVS wird ein Videobild der Sendung einem Operator zum Codieren vorgeführt, statt der physikalischen Sendung bei den manuellen Codierplätzen. Das Videobild wird dem Operator gezeigt, während die physikalische Sendung in Verzögerungsstrecken gehalten wird. In diesen Verzögerungsstrecken wird normalerweise die Sendung in Bewegung gehalten für eine Zeitdauer, die ausreicht, damit der OVS-Operator die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Das Hauptproblem bei der Verwendung von OVS ist, daß die zur Verfügung stehende Zeit lediglich ausreicht für eine sorgfältige Eingabe der Postleitzahl (ZIP) oder des Postcodes (PC), es sei denn, daß unpraktikabel lange Verzögerungsstrecken verwendet werden.

Solange ein ZIP oder PC vorhanden ist, kann OVS auch für mit chinesischen Zeichen adressierte Sendungen effektiv eingesetzt werden. Allerdings ist der Anteil solcher Sendungen in vielen östlichen Ländern sehr gering und wird es auch in der vorhersehbaren nächsten Zukunft bleiben.

Daher wurden spezielle Codierverfahren entwickelt, um die notwendige On-line-Verzögerungszeit möglichst gering zu halten.

Um die Codierproduktivität zu erhöhen und/oder die Angabe von sämtlichen Adreßelementen, d. h. ZIP/PC, Straße/Postfach, Adressat/Postfach, Adressat/Firma, zu ermöglichen, sind im Stand der Technik verschiedene Methoden entwickelt worden. Im wesentlichen sind dies:

### Vorschau-Codierung

Bei der Vorschau -Codierung erfolgt ein simultanes Display der Bilder von zwei Sendungen erfolgt; eines über dem anderen. Hierbei ist das niedrigere Bild das aktive, d. h. dessen Daten codiert werden. Nach einem geeigneten Training ist es Operatoren möglich, die Information auf dem unteren Bild zu codieren, während sie bereits die Adreßinformation vom oberen Bild visuell erfassen. Das obere Bild wird anschließend aktiv und der Prozeß wird fortgesetzt. Mit der Vorschau-Codierung ist es möglich, durch eine vollständige Überlappung der kognitiven und motorischen Funktionen beim Codieren aufeinanderfolgender Abbilder die Operator-Produktivität zu verdoppeln.

### Extraktionscodierung

Da bei den praktisch erreichbaren On-line-Verzögerungs-Zeiten lediglich die ZIP/PC Adresselemente verläßlich vom Operator eingegeben werden können, werden beim Extraktionscodieren bestimmte Schlüsselbestandteile der sich auf die Straße beziehenden Adressbestandteile eingegeben. Üblicherweise basiert die Extraktionscodierung auf speziell entwickelten Regeln, bei denen ein Code fester Länge als Zugangsschlüssel zu einem Adressverzeichnis verwendet wird. Zum Beispiel verwendet die Royal Mail eine Extraktionsformel, die auf den ersten drei und den letzten zwei Buchstaben basiert. Dabei müssen Sonderregeln vom Operator auswendig gelernt werden, um überflüssige Adressinformationen zu vermeiden und bestimmte unterscheidende Merkmale wie z.B. Richtungen zu berücksichtigen, z.B. Ost, West oder Kategorien z.B. Street, Lane, Road.

Extraktionscodierung besitzt trotz ihrer gewissen Effektivität einige größere Nachteile; insbesondere komplexe Extraktionsregeln, die häufig die Berücksichtigung des Endes eines Straßennamens erfordern, während diese Bestandteile bei handgeschriebenen Sendungen üblicherweise am unklarsten geschrieben sind. Außerdem findet man eine signifikant hohe Rate von nicht eindeutigen Extraktionen, bei denen mehrere Einträge in einem Verzeichnis dem Extraktionscode entsprechen, so daß keine eindeutige Sortierentscheidung getroffen werden kann. Desweiteren ist zu berücksichtigen, daß die Eingabeproduktivität der Operateure vermindert wird, sobald vom Operateur Entscheidungen getroffen werden müssen, statt einer einfachen repetitiven Tastatureingabe.

### Komplettierungscodierung

Bei der Komplettierungscodierung wird im Kontrast zur Extraktionscodierung für jede zu kodierende Adresse eine variable Eingabe vorgenommen. Im wesentlichen wird bei der Adreßeingabe ein Abgleich mit dem Adreßverzeichnis vorgenommen, bis eine eindeutige Übereinstimmung erreicht ist. Durch die Darstellung des Rests der Adresse, sobald eine eindeutige Teilübereinstimmung identifiziert worden ist, wird ein Beschleunigungseffekt erreicht. Probleme treten bei dieser Technik jedoch dadurch auf, daß dem Operateur ein Eingabestop-Signal zugeführt werden muß und eine Darstellung des identifizierten Adressrests notwendig ist, was zu einer verminderten Eingabeproduktivität führt und eine Vorausschaucodierung unmöglich macht.

Theoretisch können alle beschriebenen Videocodiertechniken auch für Sendungen mit chinesischen Schriftzeichen eingesetzt werden, obwohl das Fehlen von schnellen Eingabetechniken für chinesische Schriftzeichen ihre Brauchbarkeit marginal bleiben lassen.

### Operator-assistierte OCR-Technik

Zur Erhöhung der on-line zu verarbeitenden Adreßinformation hat die US Post mit operator-assistierten OCR-Techniken experimentiert. Hierbei wird zur Erhöhung der Effektivität der Teil des Adreßbildes hervorgehoben, bei dem die OCR-Erkennung versagt hat. Da die Operateure bei der Entzifferung von fehlenden Buchstaben langsam sind und zum Teil auch komplexe Erkennungsfehler, z.B. Segmentierungsprobleme auftreten, ist bei diesem Verfahren die Operateurproduktivität häufig niedriger als bei einfachen Wiedereingabe der betreffenden Adresse.

### Off-line Codierung

Da bei keiner der oben erwähnten Codierungstechniken eine ausreichend hohe Produktivität bei reiner On-line-Codierung erreicht wird, wurde kürzlich ein off-line Codiersystem eingeführt, wie in der US PS 49 92 649 beschrieben. Bei diesem System werden Sendungen mit nicht erkannten Adressen mit einer zusätzlichen Information, einer tracking identification (TID) versehen. Die nicht erkannten Sendungen werden extern gespeichert, während die Bilder dieser Sendungen Operateuren zum Codieren präsentiert werden, wobei keine zeitlichen Einschränkungen im Sekundenbereich vorliegen. Anschließend werden die Sendungen TID-Lesegeräten vorgeführt. Die TID wird mit der eingegebenen Adreßinformation verknüpft. Darauf basierend kann auch eine übliche Barcode-Sortierinformation auf die Sendung aufgebracht werden, so daß die betreffende Sendung wie üblicherweise OCR-gelesene Sendungen bearbeitet werden können. Obwohl das off-line-Videocodierverfahren eine effektive Methode zur Codierung sämtlicher Adreßbestandteile darstellt, werden zusätzlich Kapazitäten für die Weiterverarbeitung von mit nichtgelesenen Adressen versehenen Sendungen und eine entsprechend komplexe Logistik verlangt.

Auch die operateurassistierten OCR-Techniken sind grundsätzlich für die Verarbeitung von Sendungen mit chinesischen Schriftzeichen geeignet, ermöglichen jedoch bisher keine schnelle Eingabe solcher Zeichen.
Diese unbefriedigende Situation wird noch dadurch verschärft, daß an den Operateur relativ hohe Anforderungen hinsichtlich des notwendigen Trainings und erforderlicher Kenntnisse gestellt werden.

Der in den unabhängigen Ansprüchen 1 und 7 angegebenen Erfindung liegt das Problem zugrunde, Verteilinformationen in Form von Adressen, insbesondere in handgeschriebenen nichtalphabetischen Schriften, die sich auf Sendungen befinden, mit gegenüber bekannten Lösungen geringen Anforderungen an das Personal schnell zu kodieren.
Die Codiereingabe mittels Spracheingabeeinheit ermöglicht eine sehr schnelle Eingabe der Adreßinformationen auch für relativ ungeübtes Personal und ist besonders vorteilhaft bei der Kodierung handgeschriebener Adressen in chinesischen Schriftzeichen ohne Postcode (ZIP).
Vorteilhafte Ausführungsformen der Erfindung sind den abhängigen Ansprüchen zu entnehmen.
Werden nach Anspruch 2 zusätzlich zur Spracheingabe Tasten zur Codiereingabe eingesetzt, insbesondere für numerische Verteilinformationsbestandteile oder häufige größere Zielgebiete mittels Funktionstasten, so kann die Eingabe noch sicherer gestaltet werden. Die über die unterschiedlichen Eingabemedien eingegebenen Bestandteile der Verteilinformation werden dann zu vollständigen Verteilinformationen zusammengefaßt.

Weiterhin ist es günstig, zur Erhöhung der Erkennungssicherheit nach Anspruch 3 gleichzeitig in einer OCR-Einheit die Adresse auszuwerten und die Verteilinformationsvorschläge mit den über die Eingabeprozedur erhaltenen Vorschlägen zu einer Gesamtliste von Verteilinformationsvorschlägen mit neuen Glaubwürdigkeiten zusammenzufassen.
Vorteilhaft ist es auch, nach Anspruch 4 die Verteilinformationsvorschläge der OCR-Einheit mit den über Tasten eingegebenen Daten zu korrelieren, um Fehler zu korrigieren.
In einer weiteren vorteilhaften Ausgestaltung der Erfindung werden mittels statistisch ermittelter Schwellwerte für Glaubwürdigkeitsmaße nach Anspruch 5 unplausible Verteilinformationsvorschläge aus der Gesamtliste entfernt, so daß schneller und sicherer eine endgültige Auswahl getroffen werden kann.

Vorteilhaft ist es auch, nach Anspruch 6 besonders häufig adressierte größere Zielgebiete mit einer Funktionstaste zu kennzeichnen.

Nachfolgend wird die Erfindung anhand von Zeichnungen näher erläutert. Dabei zeigen
Fig. 1 eine schematische Darstellung einer erfindungsgemäßen Anordnung
Fig. 2 einen Datenfluß bei der Codierung von Sendungen

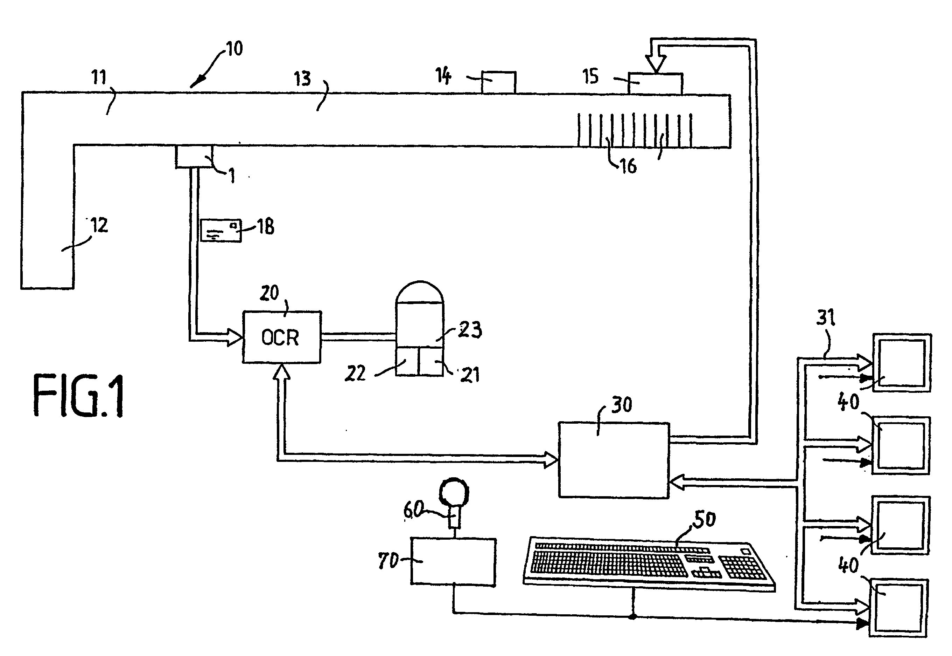

Fig. 1 zeigt eine schematische Darstellung einer Briefverteilanlage zur Ausführung des erfindungsgemäßen Verfahrens. Ein OCR-Briefsortierer 10 besteht aus einer Zuführeinrichtung 11, die sukzessive Sendungen aus einem Magazin 12 abzieht und mit ca. 10 Sendungen pro Sekunde zu einem hochauflösenden Videoscanner 17 als Vorrichtung zur Gewinnung von Abbildern der Sendungen transportiert. Anschließend werden die Sendungen in einer Verzögerungsstrecke 13 transportiert. Die Sendungen weisen üblicherweise auf ihrer Oberfläche Verteil-, insbesondere Adreßinformationen auf. In einer OCR-Einheit 20 erfolgt eine Auswertung der Adreßinformationen der Abbilder der Sendungen, die vom Videoscanner 7 gewonnen wurden. Im Fall einer vollständigen Auswertung wird ein Barcodedrucker 4 angesteuert und die Sendung wird mit einem entsprechenden Barcode für die anschließende Sortierung in Sortierfächer 16 versehen. Die OCR-Einheit 20 besteht aus einem oder mehreren Microprozessoren 21 mit assoziiertem Speicher 22, um Abbilder der Sendungen zu speichern. Weiterhin beinhaltet die OCR-Einheit ein Wörterbuch 23 mit ZIP-Codes, Städtenamen und Straßennamen und evtl. weiterer adreßbezogener Information. Bei der Auswertung der Adreßinformation aufweisenden Abbilder erfolgt vorzugsweise eine merkmalsgesteuerte Reduktion der aus dem Adreßverzeichnis gewonnenen Eintragung, so daß eine Art Teilwörterbuch erzeugt wird. Den einzelnen Eintragungen werden dabei Glaubwürdigkeiten zugeordnet, so daß bei der Auswertung eine Anzahl von Daten von als richtig erkannten Adressen erzeugt werden. Die Vorrichtung enthält weiterhin eine Verarbeitungseinheit 30 sowie eine Anzahl Videocodierplätze 40, die mit der Verarbeitungseinheit 30 direkt oder durch ein lokales Netzwerk (LAN) 31 verbunden sind. Vorzugsweise werden Workstations als Videocodierplätze eingesetzt. Falls die OCR-Auswertung eines Abbildes nicht vollständig erfolgreich war, wird dieses Bild von der OCR-Einheit 20 zur Verarbeitungseinheit 30 transferiert, die u.a. einen TID Barcodedrukker 15 steuert und das entsprechende Bild zu einem der Videokodierplätze 40 sendet. Der TID Barcodeprinter 15 bringt auf die entsprechende Sendung einen Identifikationskode TID auf, der es zu einem späteren Zeitpunkt ermöglicht, die ausgewertete Adreßinformation mit der physikalischen Sendung zu knüpfen. Die Auswertung der Abbilder erfolgt in diesem Fall vorzugsweise off-line, obwohl grundsätzlich bei einer genügend langen Verzögerungszeit auch eine on-line-Auswertung durch Videocodierung möglich ist. Im letzteren Fall kann der TID auch zu einem späteren Zeitpunkt, d.h. wenn die Videocodierung innerhalb einer bestimmten vorgegebenen Zeit nicht zu einer vollständigen Auswertung geführt hat, auf die Sendungen aufgebracht werden.
Wie schematisch angedeutet, ist an jeden Videocodierplatz 40 eine Tastatur 50 zur Tasteneingabe und eine Spracheingabeeinheit, bestehend aus einem Mikrofon 60 und einem Spracherkennungsmodul 70, angeschlossen.

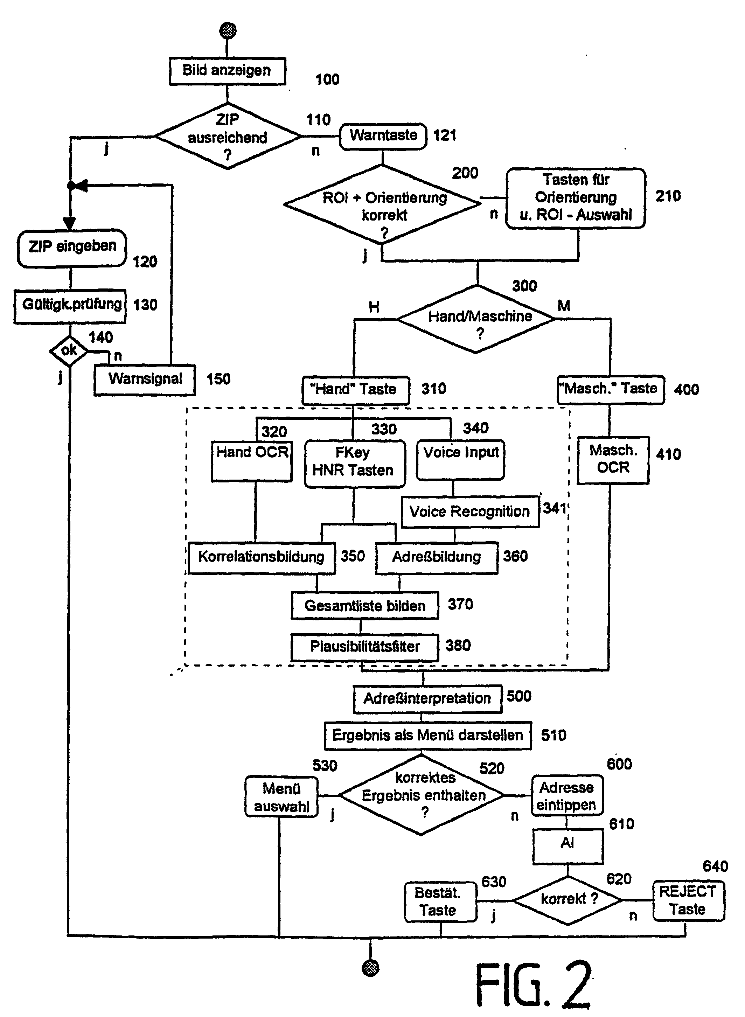

Gemäß Fig. 2 liegt als Eingabe das Bild (in 2 oder mehr Graustufen) einer Sendung (z.B. Brief, Großbrief, Paket) mit Zusatzinformationen über Ergebnisse der vorherigen Verarbeitung (z.B. Orientierung, Lage des Adreßblocks) an; als Ausgabe wird eine Zeichenkette bereitgestellt, die die dem Sendungsbild zugeordnete Verteilinformation enthält.

Das Sendungsbild wird auf dem Bildschirm des Videocodierplatzes dargestellt 100, wobei die möglichen Adreßfelder (ROIs) farbig umrandet und mit laufenden Nummern ab 1 gekennzeichnet sind. Die Vorzugs-ROI ist gegenüber den anderen ROIs durch eine andere Farbe (z.B. rot) hervorgehoben. Der Operateur entscheidet, ob das Sendungsbild einen sichtbaren und zur vorgesehenen Verteilung ausreichenden Postcode (ZIP) enthält 110. Falls ja, gibt er diesen über die Tastatur ein 120. Nach Abschluß der Eingabe wird die Gültigkeit des ZIP anhand einer Liste zulässiger ZIPs geprüft 130, 140. Bei ungültigem ZIP wird ein Warnsignal (z.B. akustisches Signal) gegeben 150 und erneute Eingabe erwartet 120. Bei gültigem ZIP wird dieser als Ergebnis ausgegeben und die Bearbeitung dieser Sendung ist beendet.

Falls das Sendungsbild keinen ausreichenden ZIP enthält, drückt der Operateur eine Warntaste 121 (z.B. ESC) und prüft, ob die Orientierung und ausgewählte Adreßregion (ROI) des Sendungsbildes korrekt bestimmt sind 200. Falls dies nicht der Fall ist, wählt er die korrekte Orientierung über Funktionstasten und/oder die korrekte ROI über Zifferntasten 210.

Die Zeichenerkennung (OCR) wird eingeleitet durch eine Entscheidung, ob in der Vorzugs-ROI Handschrift oder Maschinenschrift vorliegt. Diese Entscheidung wird über einen statistisch adaptierten Klassifikator vorbereitet 300 und vom Operateur bestätigt (über Leertaste) bzw. korrigiert (über z.B. die Tasten "H" bzw. "M") 310/400.

Liegt eine handschriftliche Adresse vor, so wird die multimediale Erkennung mittels Spracheingabe und Handeingabe angesteuert. Hierzu werden gleichzeitig die Vorzugs-ROI durch die Hand-OCR 320 bearbeitet; der Operateur gibt den Namen der Stadt (falls definiert) über Funktionstaste sowie die numerischen Bestandteile der Adresse (z.B. Hausnummer) über Zifferntasten ein 330; gleichzeitig spricht er den Namen der Stadt (falls nicht auf Funktionstaste definiert) oder andernfalls den Namen der Straße in das angeschlossene Mikrofon 340. Das analoge Sprachsignal vom Mikrofon wird in digitale Daten gewandelt und vom Spracherkennungsmodul bearbeitet 341, wobei eine mit Glaubwürdigkeitsmaßen bewertete Liste von Kandidaten erstellt wird.

Das Ergebnis der Hand-OCR 320 wird mit den eingegebenen Tastencodes 330 dergestalt korreliert 350, daß der Städtenamen, falls vorhanden, mit dem Städtenamen, der sich aus der Hand-OCR ergibt, verglichen und jener im Konfliktfall korrigiert wird, und daß die Ziffernsequenz, die für die numerischen Adreßbestandteile steht, in Position und Wert mit dem OCR-Ergebnis verglichen und jenes im Konfliktfall korrigiert wird. Als Ergebnis der Korrelation liegt eine mit Glaubwürdigkeitsmaßen bewertete Liste aus keiner, einer oder mehreren Zeichenketten vor, die jeweils für eine wohlgeformte Adresse stehen.

Das Ergebnis der Spracherkennung 341 wird mit den eingegebenen Tastencodes 330 derart zusammengesetzt 360, daß die Adreßbestandteile (Stadtname, Straßenname, Hausnummer usw.) in einer Zeichenkette in der richtigen Reihenfolge aufgereiht werden. Für jeden Kandidaten aus der Spracherkennung 341 wird eine entsprechende Zeichenkette erzeugt.

Die in den Schritten 350 und 360 erstellten Listen von Zeichenketten werden zu einer Gesamtliste in einheitlichem Format und mit bei Gleichheit der Zeichenketten kumulierten Glaubwürdigkeitsmaßen zusammengefaßt 370. Anhand von statistisch adaptierten Schwellwerten für Glaubwürdigkeitsmaße werden hinreichend unplausible Ergebnisse aus der Gesamtliste entfernt 380. Als Ergebnis liegt hiernach eine Liste von Adreßalternativen vor.

Liegt eine maschinenschriftliche Adresse vor, so wird die Vorzugs-ROI in herkömmlicher Weise von einer auf Maschinenschrift parametrisierten OCR bearbeitet 410.

Das Ergebnis der Schritte 380 oder 410 werden mit einer herkömmlichen Adreßinterpretation 500 bearbeitet, die die syntaktische Wohlgeformtheit und lexikalische Existenz für jede Adreßalternative prüft, den entsprechenden ZIP aus dem Wörterbuch bestimmt und eine oder mehrere Ergebnisalternativen, jeweils bestehend aus dem ZIP und der vollständigen oder hinlänglich eindeutigen Adreßzeichenfolge, als Ergebnis bereitgestellt.

Das Ergebnis der Adreßinterpretation wird in Form eines Auswahlmenüs (multiple choice) auf dem Bildschirm dargestellt 500, wobei diejenige Ergebnisalternative mit größter Glaubwürdigkeit an erster Position erscheint. Der Operateur prüft nun durch Vergleich des Sendungsbildes 100 und des Menüs 500, ob das der Sendung entsprechende Ergebnis im Menü enthalten ist 520. Ist dies der Fall, so markiert er durch Zifferntaste (bzw. durch Leertaste, die der ersten Alternative entspricht) das zutreffende Ergebnis 530. Der der ausgewählten Alternative zugeordnete ZIP wird als Ergebnis ausgegeben, und die Bearbeitung dieser Sendung ist beendet.

Ist das korrekte Ergebnis nicht im Menü enthalten, so schreibt der Operateur die Adresse über Buchstabentasten mit abgekürzt phonetischer oder einer anderen geeigneten Codierung ab 600. Die eingegebene Zeichenfolge wird mit einem weiteren Aufruf der herkömmlichen Adreßinterpretation bearbeitet und das Ergebnis wiederum in Menüform dargestellt 610. Der Operateur wählt das korrekte Ergebnis wie bei Schritt 530 aus 630 bzw. falls das korrekte Ergebnis nicht im Menü enthalten ist, betätigt er die REJECT-Taste 640, was zu einem endgültigen Verwerfen der aktuellen Sendung führt. Diese muß dann mit Handverteilung o.ä. weiter bearbeitet werden.

## Patentansprüche

1. Verfahren zum Erkennen von Verteilinformationen auf Sendungen mit Hilfe von Videocodierplätzen (40), an die die aufgenommenen, digitalisierten und abgespeicherten Abbilder der die Verteilinformationen enthaltenden Sendungsoberflächen weitergeleitet werden, wobei die ermittelten Verteilinformationen mit Wörterbüchern abgeglichen werden,
**dadurch gekennzeichnet, daß**
- die auf dem Bildschirm des Videocodierplatzes (40) dargestellten jeweiligen Verteilinformationen ganz oder teilweise mittels einer angeschlossenen Spracheingabeeinheit, bestehend aus Mikrofon (60) und Spracherkennungsmodul (70), eingegeben werden und von den in der Spracheingabeeinheit erzeugten nach Glaubwürdigkeit bewerteten Verteilinformationsvorschlägen nach Wörterbuchabgleich der oder die Vorschläge mit den höchsten Glaubwürdigkeiten zur Bestätigung oder Auswahl auf den Bildschirm des Videocodierplatzes (40) gegeben werden.

2. Verfahren nach Anspruch 1,
**dadurch gekennzeichnet, daß**
- mindestens vorhandene numerische Teile der auf dem Bildschirm des Videocodierplatzes (40) dargestellten jeweiligen Verteilinformationen mittels der Tastatur (50) und Namen mittels der Spracheingabeeinheit eingegeben werden,
- für jede Verteilinformation die mittels Tastatur (50) eingegebenen Daten und über die Spracheingabe ermittelten, nach Glaubwürdigkeit bewerteten Namenskandidaten zu einer Liste vollständiger Verteilinformationsvorschläge zusammengefaßt werden,
- nach Wörterbuchabgleich der oder die Verteilinformationsvorschläge mit den höchsten Glaubwürdigkeiten für die gültige Verteilinformation zur Bestätigung/Auswahl auf den Bildschirm des Videocodierplatzes (40) gegeben werden.

3. Verfahren nach Anspruch 1 oder 2,
**dadurch gekennzeichnet,**
**daß** die jeweilige Verteilinformation zusätzlich in einer OCR-Einheit (20) ausgewertet wird, mit einer Liste von nach Glaubwürdigkeiten bewerteten Verteilinformationsvorschlägen als Ergebnis, und diese Liste mit der über mindestens die Spracheingabe ermittelten Liste der nach Glaubwürdigkeit bewerteten Verteilinformationsvorschläge zu einer Gesamtliste im einheitlichen Format mit sich aus beiden Listen ergebenden Glaubwürdigkeiten zusammengefaßt wird, aus der nach Wörterbuchabgleich die Kandidaten mit den höchsten Glaubwürdigkeiten auf den Bildschirm des Videocodierplatzes (40) gegeben werden.

4. Verfahren nach Anspruch 3,
**dadurch gekennzeichnet,**
**daß** die Verteilinformationsvorschläge der OCR-Einheit (20) mit den über die Tasten eingegebenen Daten korreliert werden und im Konftiktfall eine Korrektur erfolgt und die im Ergebnis erhaltene Liste der nach Glaubwürdigkeit bewerteten Verteilinformationsvorschläge zur Bildung der Gesamtliste verwendet wird.

5. Verfahren nach Anspruch 1 bis 4,
**dadurch gekennzeichnet,**
**daß** in einem Plausibilitätsfilter mittels statistisch ermittelter Schwellwerte für die Glaubwürdigkeitsmaße unplausible Verteilinformationsvorschläge aus der Gesamtliste entfernt werden.

6. Verfahren nach Anspruch 2,
**dadurch gekennzeichnet,**
**daß** neben den numerischen Teilen der Verteilinformation über Zifferntasten größere Sendungsziele über Funktionstasten eingegeben werden.

7. Anordnung zum Erkennen von Verteilinformationen auf Sendungen mit
- einer Vorrichtung zur Gewinnung von Abbildern von Sendungen (17),
- einer OCR-Einheit (20) zur automatischen Auswertung der Verteilinformationen aufweisenden Abbilder der Sendungsoberflächen,
- einer Vorrichtung zur Videocodierung der die Verteilinformationen enthaltenden Abbilder der Sendungsoberflächen mit mindestens einem Videocodierplatz (40),
- einer Verarbeitungseinheit (30), die die Datenflüsse zwischen den Ein- und Ausgabeeinheiten der Vorrichtung zur Videocodierung und der OCR-Einheit (20) steuert,
**dadurch gekennzeichnet,**
**daß** an jeden Videocodierplatz (40) eine Spracheingabeeinheit, bestehend aus einem Mikrofon (60) und einem Spracherkennungsmodul (70), angeschlossen ist und mittels der Verarbeitungseinheit (30) aus den Verteilinformationsvorschlägen der Spracheingabeeinheit nach Wörterbuchabgleich die Verteilinformationsvorschläge mit den höchsten Glaubwürdigkeiten zur Auswahl oder Bestätigung an den Bildschirm des jeweiligen Videocodierplatzes (40) übertragen werden.

8. Anordnung nach Anspruch 7,
**dadurch gekennzeichnet,**
**daß** in der Verarbeitungseinheit (30) aus mittels der Spracheingabeeinheit erzeugten Namensvorschlägen und Tasteneingabesignalen vollständige Verteilinformationsvorschläge erzeugt werden,

9. Anordnung nach Anspruch 7 oder 8,
**dadurch gekennzeichnet,**
**daß** in der Verarbeitungseinheit (30) aus der über mindestens die Spracheingabe ermittelten, nach Glaubwürdigkeiten bewerteten Liste der Verteilinformationsvorschläge und einer hierzu von der OCR-Einheit (20) erzeugten Liste von nach Glaubwürdigkeiten bewerteten Verteilinformationsvorschlägen eine Gesamtliste von Verteilinformationsvorschlägen mit sich aus beiden Listen ergebenden Glaubwürdigkeiten erzeugt wird, deren glaubwürdigste Vorschläge zu einem Videocodierplatz (40) übertragen und dort angezeigt werden.

## Claims

1. Method for recognizing distribution information on mail with the aid of video coding stations (40), to which the recorded, digitized and stored images of the mail surfaces containing the distribution information are forwarded, the distribution information determined being adjusted by means of dictionaries,
**characterized in that**
- the respective distribution information displayed on the screen of the video coding station (40) is completely or partially input by means of a connected voice input unit, comprising microphone (60) and voice recognition module (70), and, of the distribution information proposals which are generated in the voice input unit and evaluated for credibility, after dictionary adjustment, the proposal or proposals with the highest credibilities are passed for confirmation or selection onto the screen of the video coding station (40).

2. Method according to Claim 1,
**characterized in that**
- at least numeric parts present in the respective distribution information displayed on the screen of the video coding station (40) are input by means of the keyboard (50) and names are input by means of the voice input unit,
- for each distribution information item, the data input by means of keyboard (50) and name candidates that are determined via the voice input and evaluated for credibility are combined to form a list of complete distribution information proposals,
- after dictionary adjustment, the distribution information proposal or proposals with the highest credibilities for the valid distribution information are passed for confirmation/selection onto the screen of the video coding station (40).

3. Method according to Claim 1 or 2,
**characterized in that**
the respective distribution information item is additionally evaluated in an OCR unit (20), with a list of distribution information proposals evaluated for credibilities as result, and this list is combined with the list - determined via at least the voice input - of the distribution information proposals evaluated for credibility to form a total list in the uniform format with credibilities produced from both lists, from which list, after dictionary adjustment, the candidates with the highest credibilities are passed onto the screen of the video coding station (40).

4. Method according to Claim 3,
**characterized in that**
the distribution information proposals of the OCR unit (20) are correlated with the data input via the keys and, in the event of conflict, a correction is effected and the list - obtained in the result - of the distribution information proposals evaluated for credibility is used to form the total list.

5. Method according to Claims 1 to 4,
**characterized in that**
implausible distribution information proposals are removed from the total list in a plausibility filter by means of statistically determined threshold values for the credibility extents.

6. Method according to Claim 2,
**characterized in that**
in addition to the numeric parts of the distribution information via numeric keys, relatively large mail destinations are input via function keys.

7. Arrangement for recognizing distribution information on mail having
- an apparatus for obtaining images of mail (17),
- an OCR unit (20) for automatically evaluating the images of the mail surfaces having distribution information,
- an apparatus for the video coding of the images of the mail surfaces containing the distribution information with at least one video coding station (40),
- a processing unit (30), which controls the data flows between the input and output units of the video coding apparatus and the OCR unit (20),
**characterized in that**
a voice input unit, comprising a microphone (60) and a voice recognition module (70), is connected to each video coding station (40) and, by means of the processing unit (30), from the distribution information proposals of the voice input unit, after dictionary adjustment, the distribution information proposals with the highest credibilities are transmitted for selection or confirmation to the screen of the respective video coding station (40).

8. Arrangement according to Claim 7,
**characterized in that**
complete distribution information proposals are generated in the processing unit (30) from key input signals and name proposals generated by means of the voice input unit.

9. Arrangement according to Claim 7 or 8,
**characterized in that**
in the processing unit (30), from the list of distribution information proposals determined via at least the voice input and evaluated for credibilities, and a list - generated for this purpose by the OCR unit (20) - of distribution information proposals evaluated for credibilities, a total list of distribution information proposals with credibilities produced from both lists is generated, whose most credible proposals are transmitted to a video coding station (40) and displayed there.

## Revendications

1. Procédé pour la reconnaissance d'informations de distribution sur des envois postaux à l'aide de postes de codage vidéo (40) auxquels sont retransmises les images prises, numérisées et mémorisées des surfaces d'envois contenant les informations de distribution, les informations de distribution déterminées étant comparées avec des dictionnaires,
**caractérisé par le fait que**
- les informations de distribution respectives représentées sur l'écran du poste de codage vidéo (40) sont saisies en totalité ou en partie au moyen d'une unité de saisie vocale raccordée, constituée d'un microphone (60) et d'un module de reconnaissance de la parole (70) et, parmi les propositions d'informations de distribution produites dans l'unité de saisie vocale et évaluées quant à leur probabilité après comparaison aux dictionnaires, la ou les propositions ayant les plus grandes probabilités sont présentées sur l'écran du poste de codage vidéo (40) en vue d'une confirmation ou d'une sélection.

2. Procédé selon la revendication 1,
**caractérisé par le fait que**
- au moins des parties numériques existantes des informations de distribution respectives représentées sur l'écran du poste de codage vidéo (40) sont saisies au moyen du clavier (50) et des noms au moyen de l'unité de saisie vocale,
- pour chaque information de distribution, les données saisies au moyen du clavier (50) et les noms candidats déterminés via la saisie vocale et évalués quant à leur probabilité sont regroupés en une liste de propositions d'informations de distribution complètes,
- après comparaison aux dictionnaires, la ou les propositions d'informations de distribution ayant les plus grandes probabilités sont présentées sur l'écran du poste de codage vidéo (40) en vue d'une confirmation ou d'une sélection.

3. Procédé selon la revendication 1 ou 2,
**caractérisé par le fait que**
l'information de distribution respective est évaluée en plus dans une unité OCR (20), est regroupée avec une liste de propositions d'informations de distribution évaluées quant à leur probabilité comme résultat, et cette liste est regroupée avec la liste, déterminée par l'intermédiaire d'au moins la saisie vocale, des propositions d'informations de distribution évaluées quant à leur probabilité en une liste globale qui a un format unique et des probabilités résultant des deux listes et à partir de laquelle, après comparaison aux dictionnaires, les candidats ayant les plus grandes probabilités sont présentés sur l'écran du poste de codage vidéo (40).

4. Procédé selon la revendication 3,
**caractérisé par le fait que**
les propositions d'informations de distribution de l'unité OCR (20) sont corrélées avec les données saisies par l'intermédiaire du clavier et, en cas de conflit, une correction est effectuée et que la liste obtenue en résultat pour les propositions d'informations de distribution évaluées quant à leur probabilité est utilisée pour la formation de la liste globale.

5. Procédé selon les revendications 1 à 4,
**caractérisé par le fait que**,
dans un filtre de probabilité, des propositions d'informations de distribution improbables sont éliminées de la liste globale au moyen de valeurs de seuil déterminées statistiquement pour les mesures de probabilité.

6. Procédé selon la revendication 2,
**caractérisé par le fait que**,
outre les parties numériques de l'information de distribution, de grandes destinations d'envois sont saisies par l'intermédiaire du pavé numérique ou des touches de fonctions.

7. Dispositif pour la reconnaissance d'informations de distribution sur des envois postaux, comportant
- un dispositif pour l'obtention d'images d'envois (17),
- une unité OCR (20) pour l'évaluation automatique des images, comportant des informations de distribution, des surfaces d'envois,
- un dispositif pour le codage vidéo des images, contenant les informations de distribution, des surfaces d'envois avec au moins un poste de codage vidéo (40),
- une unité de traitement (30) qui commande les flux de données entre les unités de saisie et de sortie du dispositif pour le codage vidéo et de l'unité OCR (20),
**caractérisé par le fait que**
il est raccordé à chaque poste de codage vidéo (40) une unité de saisie vocale, constituée d'un microphone (60) et d'un module de reconnaissance de la parole (70), et au moyen de l'unité de traitement (30), à partir des propositions d'informations de distribution de l'unité de saisie vocale et après comparaison aux dictionnaires, les propositions d'informations de distribution ayant les plus grandes probabilités sont transmises à l'écran du poste de codage vidéo (40) respectif en vue d'une sélection ou d'une confirmation.

8. Dispositif selon la revendication 7,
**caractérisé par le fait que**,
dans l'unité de traitement (30), des propositions d'informations de distribution complètes sont produites à partir de propositions de noms faites au moyen de l'unité de saisie vocale et à partir de signaux d'entrée de touches.

9. Dispositif selon la revendication 7 ou 8,
**caractérisé par le fait que**,
dans l'unité de traitement (30), à partir de la liste, déterminée par l'intermédiaire d'au moins la saisie vocale et pondérée par des probabilités, des propositions d'informations de distribution et à partir d'une liste, produite par l'unité OCR (20), de propositions d'informations de distribution évaluées quant à leur probabilité, une liste globale de propositions d'informations de distribution est produite avec des probabilités résultant des deux listes, les propositions les plus probables de cette liste globale étant transmises à un poste de codage vidéo (40) et affichées là.
